# EUROPEAN PATENT APPLICATION

(11) **EP 2 720 117 A1**
(43) Date of publication of application: **16.04.2014**
(21) Application number: 12187862.3
(22) Date of filing: 09.10.2012
(51) Int. Cl.: G06F 3/033

(54) **Apparatus and method pertaining to the use of multiple location modalities with a stylus**

(71) Applicant: BlackBerry Limited, Waterloo, ON N2K 0A7 (CA)
(72) Inventor: Idzik, Jacek S., Waterloo, Ontario N2L 3W8 (CA); Mercea, Cornel, Waterloo, Ontario N2L 3W8 (CA)
(74) Representative: Hibbert, Juliet Jane Grace

(57) **Abstract**

A stylus is configured for interactive use with a scribing surface. The stylus comprises a stylus housing and a first control circuit support by the stylus housing. The first control circuit is configured to simultaneously effect, as a primary operating state as regards tracking movement of a stylus, at least two different location modalities wherein each of the location modalities imparts location-determination information. The aforementioned two different location modalities can both be selected from a group consisting of capacitively-based non-passive approaches, acoustically-based non-passive approaches, magnetically-based non-passive approaches, light-emitting-based non-passive approaches, camera-based non-passive approaches, and radio-frequency-based non-passive approaches.

## Description

### Field of Technology

The present disclosure relates to styli used with scribing surfaces to input information into an electronic device.

### Background

Generally speaking, a stylus is typically a hand-held writing utensil that often (but not exclusively) has a pencil-like elongated form factor and that includes at least one pointed end configured to interact with a scribing surface. Using a stylus as an input mechanism with, for example, a display offers a variety of advantages over a fingertip including the opportunity for increased precision as well as an expression modality that accords with the user's own past experience with a pencil or pen.

To operate successfully, of course, the system must be able to glean the location and movement of the stylus over time with respect to the scribing surface. There are a considerable number of known methodologies and technologies that are employed for this purpose. Examples of such location modalities include, but are not limited to, capacitively-based approaches, acoustically-based non-passive approaches, magnetically-based non-passive approaches, light-emitting-based non-passive approaches, camera-based non-passive approaches, radio-frequency-based non-passive approaches, and so forth.

Under favorable operating circumstances many of these prior art location-determining approaches offer useful or even exemplary performance. Good performance, in turn, helps to ensure accurate and timely tracking of the stylus with respect to the scribing surface. Reliable tracking, in turn, facilitates a better user experience.

Unfortunately, users employ their devices in a variety of operating conditions that vary not only from one user to another but even from time to time and from place to place for a given user. As a result, even the best available location modalities can yield sub-par performance (often without warning).

### Brief Description of the Drawings

FIG. 1 is a perspective view in accordance with the disclosure.

FIG. 2 is a block diagram in accordance with the disclosure.

FIG. 3 is a flow diagram in accordance with the disclosure.

FIG. 4 is a flow diagram in accordance with the disclosure.

### Detailed Description

The following describes an apparatus and method pertaining to a stylus configured for interactive use with a scribing surface. The stylus comprises a stylus housing and a first control circuit support by the stylus housing. The first control circuit is configured to simultaneously effect, as a primary operating state as regards tracking movement of the stylus, at least two different location modalities wherein each of the location modalities impart location-determination information. By one approach, both of these two location modalities comprise non-passive location modalities. If desired, both of these location modalities can comprise reporting location information regarding a scribing tip for the stylus.

These teachings are highly flexible in practice and will accommodate, for example, any of a wide variety of location modalities. For example, the aforementioned two different location modalities can both be selected from a group consisting of capacitively-based approaches, acoustically-based non-passive approaches, magnetically-based non-passive approaches, light-emitting-based non-passive approaches, camera-based non-passive approaches, and radio-frequency-based non-passive approaches.

Such a stylus can be used with, for example, an apparatus having the aforementioned scribing surface and a second control circuit that is configured to simultaneously use the location-determination information corresponding to the aforementioned at least two different location modalities to determine a present location of the stylus with respect to that scribing surface. This information, in turn, can facilitate tracking movement of the stylus with respect to the scribing surface.

So configured, a given stylus can employ location-modality diversity to increase the likelihood that at any given time and under any given operating condition at least one of the modalities will deliver nominal or better performance. This performance, in turn, can help to ensure expected and useful results for the user. These teachings can be employed with a variety of stylus form factors and scribing surfaces.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

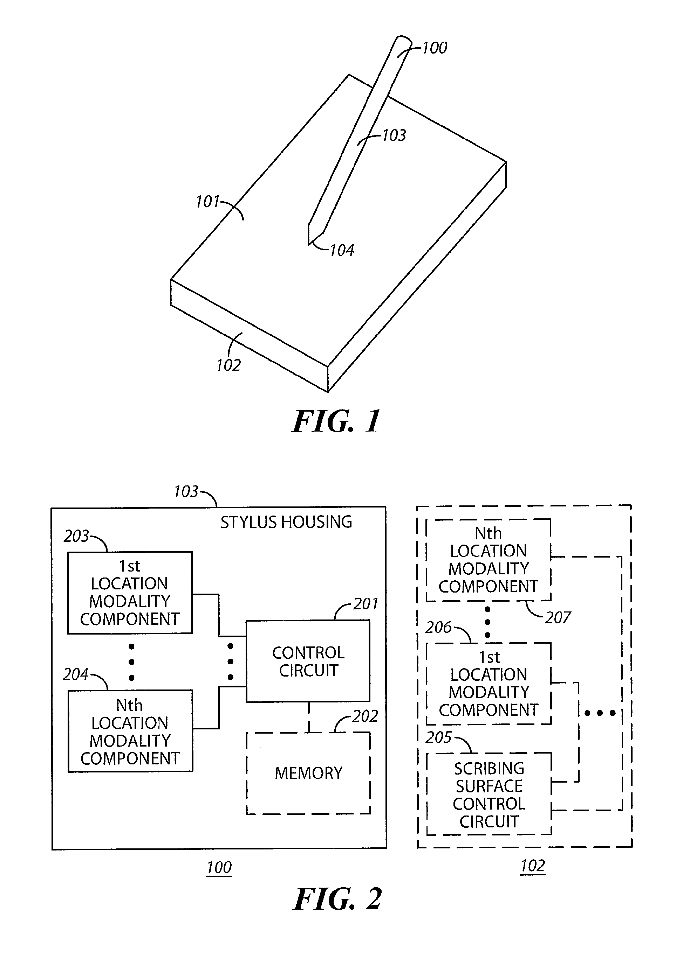

FIG. 1 presents an illustrative example of a stylus 100 configured to compatibly communicate with a corresponding scribing surface 101. In this example the scribing surface 101 comprises a touch-sensitive display that is a part of a device 102 such as a pad/tablet-styled computer or a so-called smartphone. Such devices, including touch-sensitive displays, are very well known in the art and require no further description here.

The stylus 100 includes a stylus housing 103 (sometimes referred to as a barrel) having at least one end that comprises a scribing tip 104 that is configured to contact the scribing surface 101 during ordinary use of the stylus 100 as a user-input mechanism. Accordingly, the scribing tip 104 will usually have a relatively small cross section at the point of contact (akin, for example, to the width of a typical pencil or ink pen).

The description provided herein presumes the use of such a stylus 100 and scribing surface 101. It will be understood, however, that no particular limitations are intended by way of this presumption. Instead, it should be understood that these teachings are highly flexible in practice and will accommodate, for example, a wide variety of stylus body 103 and scribing surface 101 form factors.

FIG. 2 presents further illustrative details regarding the internal components of the stylus 100. In particular, in this example the stylus housing 103 contains a control circuit 201. Such a control circuit 201 can comprise a fixed-purpose hard-wired platform or can comprise a partially or wholly programmable platform. These architectural options are well known and understood in the art and require no further description here. This control circuit 201 is configured (for example, by using corresponding programming as will be well understood by those skilled in the art) to carry out one or more of the steps, actions, and/or functions described herein.

By one approach, the stylus 100 can further optionally include a memory 202 that operably couples to the control circuit 201. The memory 202 may be integral to the control circuit 201 or can be physically discrete (in whole or in part) from the control circuit 201 as desired. This memory 202 can serve, for example, to non-transitorily store the computer instructions that, when executed by the control circuit 201, cause the control circuit 201 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM)).

As will be described below in more detail, the control circuit 201 is configured to simultaneously effect two or more different location modalities that each impart corresponding location-determination information. To support this capability, the stylus 100 in this illustrative example further includes a first through an Nth location modality component (represented by reference numerals 203 and 204) (where "N" comprises an integer greater than 1) that operably couple to the control circuit 201. As used herein, the word "component" will be understood to refer to any of a variety of structures including individual components (such as, for example, a transducer of choice) as well as sub-assemblies and assemblies that each include a plurality of individual components.

As noted, these teachings will accommodate using two or more location modality components as desired. For the sake of clarity and simplicity, however, the illustrative examples provided herein will tend to refer to only a two-component approach. Specificity in this regard, however, should not be taken a suggestion that these teachings are limited to only a two-component approach.

By one approach, the two different location modality components 203 and 204 are in service of non-passive location modalities and hence employ one or more active components (i.e., a component that consumes power). If desired, however, there may be application settings where one or more of the location modality components 203 and 204 may wholly comprise passive elements.

As noted above, these location modality components 203 and 204 are in service of corresponding location modalities. The present teachings will accommodate a considerable variety of combinations in these regards. By one approach, for example, the location modalities can be selected from a group consisting of a capacitively-based non-passive location modality, an acoustically-based non-passive location modality (such as an ultrasonically-based location modality, a magnetically-based non-passive location modality, a light-emitting-based non-passive location modality (such as an infrared-light-based non-passive location modality), a camera-based non-passive location modality, and/or a radio-frequency-based non-passive location modality.

Those skilled in the art will recognize that such modalities, and the details of various supporting embodiments in these regards, are well known in the art. Accordingly, further details in these regards are not presented here for the sake of brevity.

Generally speaking, such a stylus 100 operates in tandem with a corresponding scribing surface 101 as noted above. The device 102 that includes that scribing surface 101 can therefore also include, if desired, a corresponding scribing surface control circuit 205 that operably couples to two or more location modality components 206 and 207 that are configured to compatibly interact with the location modality components 203 and 204 of the stylus 100 to thereby each support an independent determination regarding a present (or nearly present) location of the stylus 100 (such as the scribing tip 104 of the stylus 100) with respect to the scribing surface 101.

Accordingly, and by way of example, when the location modality components 203 and 204 of the stylus 100 serve an acoustically-based non-passive location modality and a light-emitting-based non-passive location modality, respectively, the location modality components 206 and 207 for the scribing surface device 102 can similarly serve, in turn, an acoustically-based non-passive location modality and a light-emitting-based non-passive location modality, respectively.

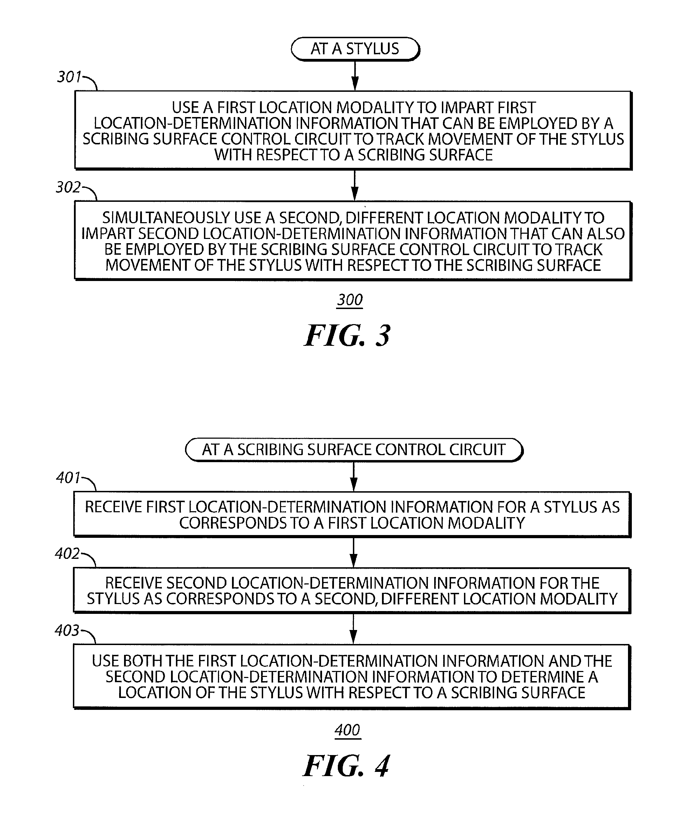

Referring now to FIG. 3, the control circuit 201 of such a stylus 100 can be configured to carry out the illustrated process 300. Pursuant to this process 300, at 301 the control circuit 201 uses a first location modality (via, for example, the first location modality component 203) to impart first location-determination information that can be employed by the scribing surface control circuit 205 to track movement of the stylus 100 with respect to the scribing surface 101. This location-deteimination information need not itself specify the location of the stylus 100 per se. Instead, this location-determination information can comprise, for example, a signal (such as a beacon at a predetermined frequency in the electromagnetic spectrum or otherwise that comprises a series of simple energy pulses) that the corresponding components of the scribing surface device 102 can receive and thereby ascertain a present position of the stylus 100 with respect to the scribing surface 101.

At 302, this process 300 also has the control circuit 201 simultaneously use a second, different location modality to impart second location-determination information that can also be employed by the scribing surface control circuit 205 (relying, for example, upon the Nth location modality component 207 where N equals 2) to also track movement of the stylus 100 with respect to the scribing surface 101. By one approach, this simultaneous use of two or more different location modalities comprises a primary operating state of the stylus 100 and not a state that reflects an occasional or unusual operating state.

For the sake of clarity in these regards, by one approach it will be understood that the two (or more) location-determination modalities are each ordinarily considered independent sufficient to make such a location determination without further supplementation (aside, perhaps, from occasional calibration based upon some alternative location-determining or specifying methodology).

Also for the sake of clarity, as used herein the reference to "simultaneously" is intended to encompass at least some operational overlap between usage of both modalities. Since one methodology may require less time on a cyclical basis to complete than the other methodology, it is of course possible that both modalities may not operate, at all times and at every instant, at the same time. As used herein, "simultaneously" will even accommodate interleaving, on a cyclical basis, the active aspects of various methodologies in order to conserve power. That said, however, the two approaches can still be viewed fairly as operating "simultaneously" with one another under such circumstances.

With reference to FIG. 4, the scribing surface control circuit 205 can effect a process 400 whereby, at 401, the scribing surface control circuit 205 receives the aforementioned first location-determination information for the stylus 100 as corresponds to the first location modality and, at 402, also receives second location-determination information for the stylus 100 as corresponds to the second, different modality. At 403 the scribing surface control circuit 205 then utilizes the location information developed by these two (or more) different approaches to determine the actual location of the stylus 100 with respect to the scribing surface 101. As with the stylus 100, by one approach this simultaneous use of two or more different location modalities comprises the primary operating state of the scribing surface control circuit 205 and not a state that reflects only an occasional or unusual operating state.

These teachings will accommodate a variety of approaches in these regards.

By one approach, for example, it may be possible to view one of the location modalities as being inherently more accurate under most operating conditions. In this case, the location results of that typically-more-accurate modality may be ordinarily used as-is unless and until the scribing surface control circuit 205 has reason to determine that the accuracy of that approach is currently suspect for some reason. Such suspicion may be based, for example, upon noting odd anomalies in the location reports of the favored modality. When such concerns arise, the scribing surface control circuit 205 can switch, at least temporarily, to the second location modality.

By another approach, the location results of both location modalities can be fused in a desired manner. By one simple approach this might comprise, for example, taking an average of the location results and using the average as the determined location result. As a related approach, these teachings would permit using an average of the location results where one or more of the results are weighted to favor (or disfavor) one or more of the location modalities to reflect increased (or decreased) trust in the results of a particular location modality.

With the foregoing in mind, there can be specific pairs of location modalities that are particularly useful in combination with one another given a particular anticipated or targeted application setting. Particularly useful pairings include, but are not limited to:
a passive location modality and an ultrasonically-based location modality;
a radio-frequency-based location modality and an ultrasonically-based location modality;
an electromagnetically-based location modality and an ultrasonically- based location modality;
an infrared light-based location modality and an ultrasonically-based location modality;
a radio-frequency-based location modality and a camera-based location modality;
an electromagnetically-based location modality and a camera-based location modality; and
an ultrasonically-based location modality and a camera-based location modality.

So configured, the scribing surface control circuit 205 can use the location information derived from the two (or more) different location modalities to determine present locations of the stylus 100 with respect to the scribing surface 101 and that location information, over time, can in turn be used to track movement of the stylus 100 with respect to the scribing surface 101. By utilizing two or more location modalities (particularly as a primary operating state), the accurate and timely trackability of the stylus 100 can improve considerably notwithstanding significantly and/or rapidly changing operational influences that may otherwise interfere with one of the modalities.

These teachings can be readily applied in conjunction with a great variety of location modalities. It will also be appreciated that these teachings will accommodate a significant number of alterations and possibilities as regards, for example, the particular manner by which the scribing surface control circuit 205 makes use of the location information derived from the two alternative location-determining approaches.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a stylus (100) configured for interactive use with a scribing surface (101), the stylus comprising:
a stylus housing (103);
a first control circuit (201) supported by the stylus housing and configured to simultaneously effect (301, 302) at least two different location modalities such that each of the location modalities imparts location-determination information.

2. The apparatus of claim 1 wherein the two different location modalities both comprise non-passive location modalities.

3. The apparatus of claim 2 wherein the two different location modalities are selected from a group consisting of:
a capacitively-based non-passive location modality;
an acoustically-based non-passive location modality;
a magnetically-based non-passive location modality;
a light-emitting-based non-passive location modality;
a camera-based non-passive location modality;
a radio-frequency-based non-passive location modality.

4. The apparatus of claim 3 wherein the two different location modalities comprise a pair of location modalities selected from a group of pairs of location modalities consisting of:
a passive location modality and an acoustically-based location modality;
a radio-frequency-based location modality and an acoustically-based location modality; an electromagnetically-based location modality and an acoustically- based location modality;
an infrared light-based location modality and an acoustically-based location modality;
a radio-frequency-based location modality and a camera-based location modality;
an electromagnetically-based location modality and a camera-based location modality;
an acoustically-based location modality and a camera-based location modality.

5. The apparatus of claim 1 wherein the two different location modalities both report location information regarding a scribing tip (104) for the stylus.

6. The apparatus of claim 5 wherein the two different location modalities are selected from a group consisting of:
a radio-frequency-based location modality;
an electromagnetically-based location modality;
an infrared light-based location modality.

7. The apparatus of claim 1 further comprising:
a second control circuit (205) is configured to simultaneously use (403) the location-determination information from the at least two different location modalities to determine a present location of the stylus with respect to the scribing surface.

8. The apparatus of claim 7 wherein the second control circuit is configured to simultaneously use the location-determination information from the at least two different location modalities to track movement of the stylus with respect to the scribing surface.

9. A method comprising:
at a stylus (100):
using (301) a first location modality to impart first location-determination information that can be employed by a scribing surface control circuit (205) to track movement of the stylus with respect to a scribing surface (101);
simultaneous with using the first location modality also using (302) a second, different location modality to impart second location-determination information that can also be employed by the scribing surface control circuit to track movement of the stylus with respect to the scribing surface.

10. The method of claim 9 wherein the simultaneous use of both the first location modality and the second location modality comprises a primary operating state of the stylus.

11. The method of claim 9 wherein the first and second location modalities both comprise non-passive location modalities.

12. A method comprising:
at a scribing surface control circuit (205):
receiving (401) first location-determination information for a stylus (100) as corresponds to a first location modality;
receiving (402) second location-determination information for the stylus as corresponds to a second, different location modality;
using (403) both the first location-determination information and the second location-determination information to determine a location of the stylus with respect to a scribing surface (101).

13. The method of claim 12 wherein the scribing surface control circuit uses the location of the stylus to track movement of the stylus with respect to the scribing surface.

14. The method of claim 12 wherein the scribing surface control circuit uses both the first and second location-determination information as a primary operating state as regards tracking movement of the stylus.
